# EUROPEAN PATENT APPLICATION

(11) **EP 3 505 456 A1**
(43) Date of publication of application: **03.07.2019**
(21) Application number: 17210732.8
(22) Date of filing: 27.12.2017
(51) Int. Cl.: B65B 25/00, A23C 3/027, A23L 2/46, A23L 3/04

(54) **A THERMAL TREATMENT MACHINE AND A RELATED METHOD**

(71) Applicant: Gebo Packaging Solutions Italy SRL, 43126 Parma (IT)
(72) Inventor: COMPOSTA, Michele, 37139 VERONA (IT); SOLFA, Andrea, 37139 VERONA (IT)
(74) Representative: Sidel Group

(57) **Abstract**

There is disclosed a thermal treatment machine (1) for carrying out a thermal treatment on an edible product contained in a plurality of articles (2), comprising: conveying means (10) for advancing along a thermal treatment path (P) a plurality of articles (2) to be treated; at least one plurality of injecting nozzles (15) fluidly connectable with a source of a heat transfer medium and actuatable to inject heat transfer medium on articles (2) travelling along a first section (S1, S3) path (P); a flow distribution element (20) fluidly connectable with the source of heat transfer medium; flow distribution system (20) comprises a channel (21) adapted to be flown by a flow of heat transfer medium; and a plurality of openings (22) in fluid connection with channel (21) and facing treatment path (P), so as to direct at least part of heat transfer medium form channel (21) over articles (2) as they advance along a second section (S2) of treatment path (P).

## Description

The present invention relates to a thermal treatment machine for carrying out a thermal treatment on an edible product contained in a plurality of articles.

The present invention also relates to a method for carrying out a thermal treatment on an edible product contained in a plurality of articles.

As is known, many pourable edible product comprising not only edible products like milk, fruit juice or beverages are sold in articles having different shape and dimension.

These articles are typically made within bottling lines, which comprise a plurality of machines for carrying out respective operations on the articles.

Very briefly, the bottling line comprises at least one rinsing machine for rinsing the articles, a filling unit for filling the articles with a pourable edible product, a capping unit for capping the articles and a labelling unit for applying a plurality of labels on the respective articles.

The bottling line also comprises a pasteurizing tunnel generally interposed between the capping unit and the labelling unit.

The pasteurizing tunnel is adapted to heat treating the edible product contained in the filled and capped articles by creating a heat exchange with a processing liquid, e.g. water, at a controlled temperature on them.

Known pasteurizing tunnels comprise:
- a plurality of conveyors for conveying the articles at a constant speed along a straight path; and
- a plurality of thermal processing zones, through which the conveyors advance the articles.

The thermal processing zones usually comprise: a heating zone in which the product temperature of the edible product inside the articles is gradually raised; a heat-treatment zone in which the edible product temperature is brought to, and kept at, a pasteurising temperature for a desired time interval; and a cooling zone in which the edible product temperature is gradually lowered up to a desired output temperature.

As the articles advance on the conveyors, the temperature of the edible product follows a temperature profile with respect to the position of the article inside the tunnel. The temperature profile basically comprises an ascending portion in the heating zone, a substantially constant portion in the heat treatment zone, and a descending portion in the cooling zone.

At the end of the temperature processing (i.e. at the output of the pasteuriser), the edible products must have been kept above a predetermined temperature for at least a predetermined time, so as to have accumulated at least one predetermined quantity of pasteurisation units (PUs). In this way, the effective pasteurisation of the processed edible product may be assured.

EP-A-2742810 discloses an apparatus also known as "spray pan" which may be incorporated in the cooling section of a pasteurizing tunnel.

In greater detail, the apparatus comprises:
- a flow distribution element arranged above the conveyors and fluidly connectable with a source of the liquid; and
- a plate and a pair of side walls, which define a channel adapted to be flown along by a flow of the processing liquid.

Still more precisely, the plate has a plurality of openings which extend above the conveyors.

Thus, as the articles travel over the conveyors, a flow of the liquid is directed under the gravity action from the channel through the openings and over the articles.

An example of a recently developed pasteurizing tunnel is known from EP-B-2702879.

In this known solution, each sub-zone comprises:
- an injecting unit positioned above the path of the articles and adapted to inject the processing liquid at a given temperature on the articles in advancement;
- at least one collection tank positioned below the same forward movement path to collect the processing liquid, injected by the injecting unit, after it has wet the products; and
- recirculating means adapted to move the processing liquid collected inside the collection tank, heat it up and feed it to the injecting unit.

The injecting unit comprises, in turn, a plurality of injectors adapted to inject the processing liquid at a given temperature on the articles in advancement.

This pasteurizing tunnel ensures a more uniform thermal treatment of the articles regardless their location on the conveyor and requires less time-consuming cleaning operations in comparison with the previously disclosed "spray-pan" solution.

However, the pasteurizing tunnel shown in EP-B-2702879 leaves room for improvement.

In particular, a need is felt to render the pasteurizing tunnel shown in EP-B-2702879 more cost-effective to be manufactured and maintained, and to reduce the pressure drop through the injection unit.

Furthermore, a need is felt to reduce the heat losses and the increased consumption due to the evaporation of the liquid deriving from the turbulent motion of the liquid.

It is an object of the present invention to provide a thermal treatment machine for carrying out a thermal treatment on an edible product contained in a plurality of articles, which meets at least one of the above-identified need.

The aforementioned object is achieved by the present invention as it relates to a thermal treatment machine for carrying out a thermal treatment on an edible product contained in a plurality of articles, as claimed in claim 1.

The invention also relates to a method for thermally treating an edible product contained in a plurality of articles, as claimed in claim 9.

One embodiment is hereinafter disclosed for a better understanding of the present invention, by way of non-limitative example and with reference to the accompanying drawings, in which:
- Figure 1 is a lateral enlarged view of a first embodiment of the thermal treatment machine in accordance with the invention, in a pasteurizer configuration with parts removed for clarity;
- Figure 2 is a perspective enlarged view of the thermal treatment machine of Figure 1, with parts removed for clarity;
- Figure 3 is a lateral further enlarged view of the thermal treatment machine of Figures 1 and 2;
- Figure 4 is a schematic view of the layout of thermal treatment machine of Figures 1 to 3; and
- Figure 5 is a schematic view of a bottling line comprising a thermal treatment machine of Figures 1 to 4.

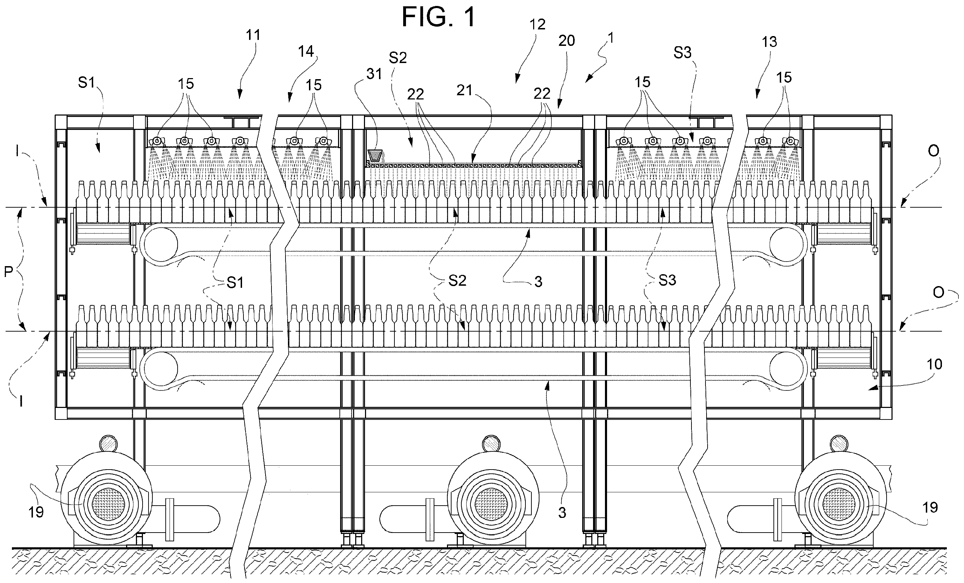

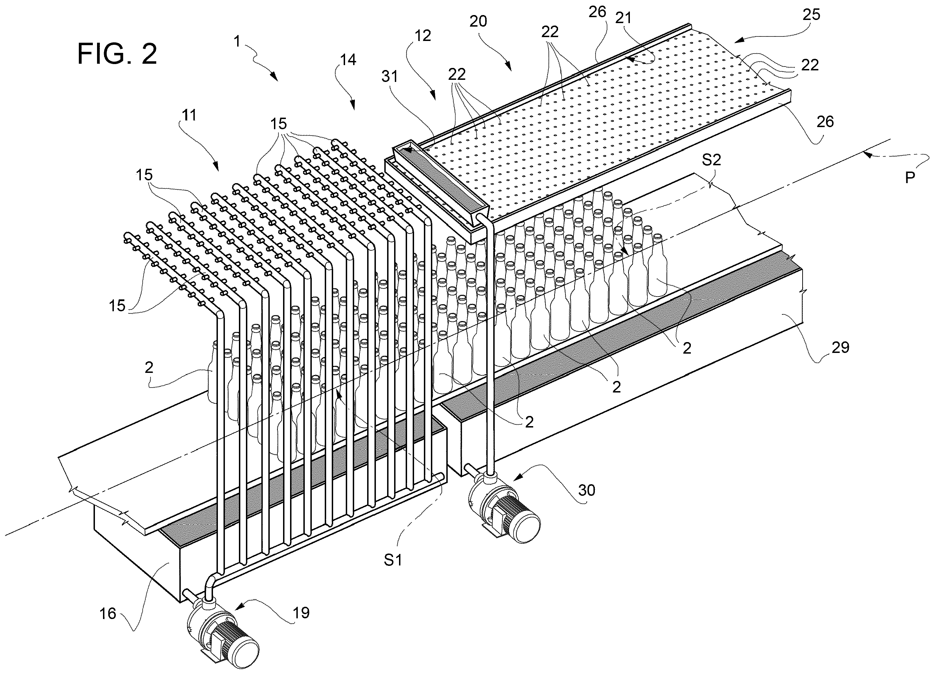

With reference to Figures 1 and 2, numeral 1 indicates as a whole a thermal treatment machine for carrying out a thermal treatment on the edible product contained inside a plurality of articles 2.

The thermal treatment can be a warming up, a cooling down or a substantially constant temperature process of the edible product or an arbitrary combination of a plurality of these steps.

Without any loss of generality, thermal treatment machine 1 is, in the embodiment shown, a tunnel pasteurizing machine for carrying out a pasteurization of the edible product contained inside a plurality of articles 2.

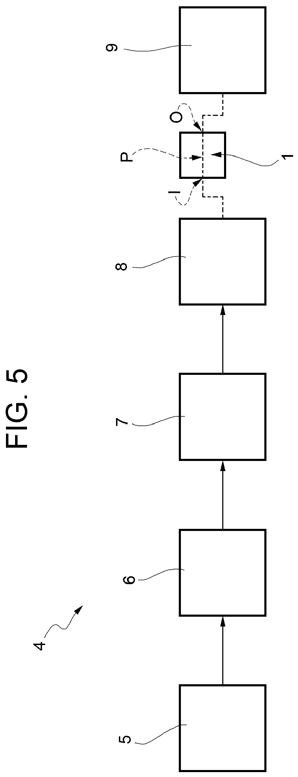

Tunnel pasteurizing machine 1 is adapted to be incorporated in a bottling line 4 (shown only schematically in Figure 5) for producing a plurality of filled, capped and labelled articles 2.

In greater detail, bottling line 4 substantially comprises:
- a collecting unit 5 for receiving articles 2, e.g. glass articles;
- a rinsing unit 6 for rising the articles 2;
- a filling unit 7 for filling the articles 2 with the pourable edible product;
- a capping unit 8 for applying a plurality of caps onto respective article 2; and
- a labelling unit 9 for labelling the articles 2 with respective labels.

Preferably, tunnel pasteurizing machine 1 is interposed between capping unit 8 and labelling unit 9, proceeding according the advancing direction of articles 2 inside bottling line 4.

Pasteurizing machine 1 substantially comprises:
- a conveying group 10 for advancing articles 2 from an input station I to an output station O along a path P; and
- a plurality of thermal zones 11, 12, 13 (Figure 2), which are adapted to carry out the thermal treatment on the edible product contained in articles 2 travelling along path P.

In particular, conveying groups 10 comprise a plurality, two in the embodiment shown, of superimposed conveyors 3 which define respective superimposed decks of thermal treatment machine 1.

In the embodiment shown, input and output stations I, O are arranged on respective opposite sides of pasteurizing machine 1.

In particular, pasteurizing machine 1 has a main extension parallel to a direction X.

Direction X is parallel to the advancing direction of articles 2 from inlet station I to outlet station O.

Thermal zones 11, 12, 13 comprise a heating zone 11, a heat treatment zone 12 and a cooling zone 13 positioned one after another along path P.

Still more precisely, the temperature of the edible product follows a temperature profile as articles 2 advance along path P.

In particular, the edible product inside articles 2 is progressively warmed up inside heating zone 11, is kept at a substantial constant value inside heat treatment zone 12 and finally progressively cooled down inside cooling zone 13.

Furthermore, the edible product inside articles 2 undergoes a pasteurization process inside heat treatment zone 12.

In this way, the edible product gains a certain amount of pasteurization unit PU depending on the amount of time during which it remains at given levels of temperature.

Path P comprises:
- a portion S1 arranged inside heating zone 11;
- a portion S2 arranged inside heat treatment zone 12; and
- a portion S3 arranged inside cooling down zone 13.

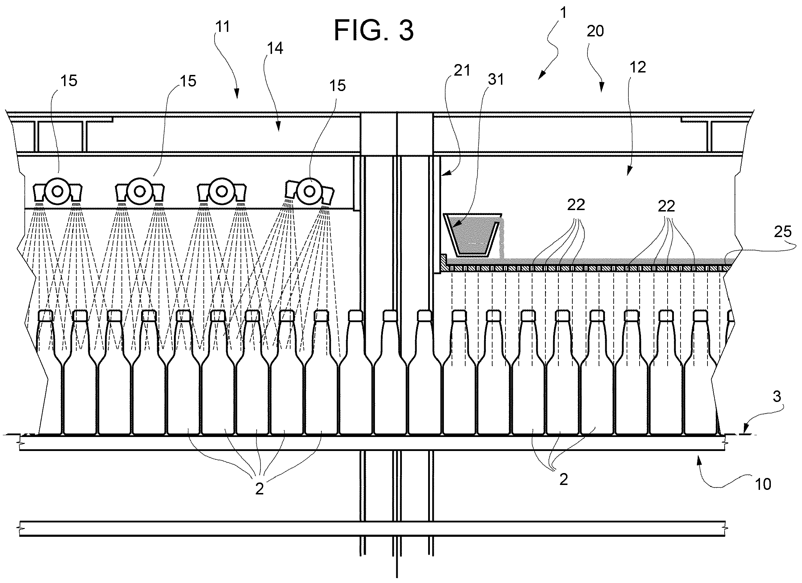

With reference to Figure 1 to 4, each one of thermal zone 11, 12, 13 is provided with feeding means 14 fluidly connected with a source 17 of processing fluid for feeding a processing fluid (for example water) onto articles 2 advancing along path P in the same thermal zone.

Each heating zone 11 and cooling down zone 13 is provided with respective rows of injecting elements 15 for injecting a processing fluid (for example water) onto articles 2.

Injecting elements 15 are defined by feeding means 14.

Advantageously, pasteurizing machine 1 comprises a flow distribution element 20 fluidly connectable with a source of processing fluid; flow distribution element 20 comprises a channel 21 adapted to be flown by a flow of the processing fluid; and a plurality of openings 22 in fluid connection with channel 21 and facing portion S2 of path P, so as to direct at least part of said processing fluid from said channel 21 over articles 2 as they advance, in use, along portion S2 of path P.

In the embodiment shown, heat treatment zone 12 is provided with flow distribution element 20.

Flow distribution element 20 is defined by feeding means 14.

In particular, flow distribution element 20 of heat treatment zone 12 is adapted to direct the processing fluid onto articles 2 at a first temperature.

Injecting elements 15 of heating zone 11 and cooling zone 13 are adapted to inject the processing fluid onto articles 2 in a range of second temperatures and in a range of third temperatures respectively.

The first temperature is higher than the maximum of the second and third temperatures.

Preferably, the first temperatures is higher than a threshold value 60°C, and the maximum value of the ranges of the second and third temperatures is lower than 60°C.

The threshold value is associated to the nature of the edible product.

In greater detail, flow distribution element 20 is arranged above portion S2 of path P.

Flow distribution element 20 comprises (Figure 2):
- a plate 25; and
- side walls 26.

Plate 25 and side wall 26 define channel 21.

Plate 25 defines the bottom surface of channel 21, has a plurality of openings 22 such that through them at least a portion of the flow of processing fluid is directed over articles 2 as they advance, on section S2 of path P, along main direction X.

In practice, as they advance along main direction X, articles 2 are reached, in succession, by different jets of processing fluid coming from respectively openings 22.

In this way, depending on the temperature of the liquid, heat is transferred (supplied or removed) from the edible product inside articles 2.

In the embodiment shown, openings 22 of flow distribution element 20 are arranged (see Figure 2) in parallel rows angled relative to direction X.

Flow distribution element 20 is fluidly connected with source 17.

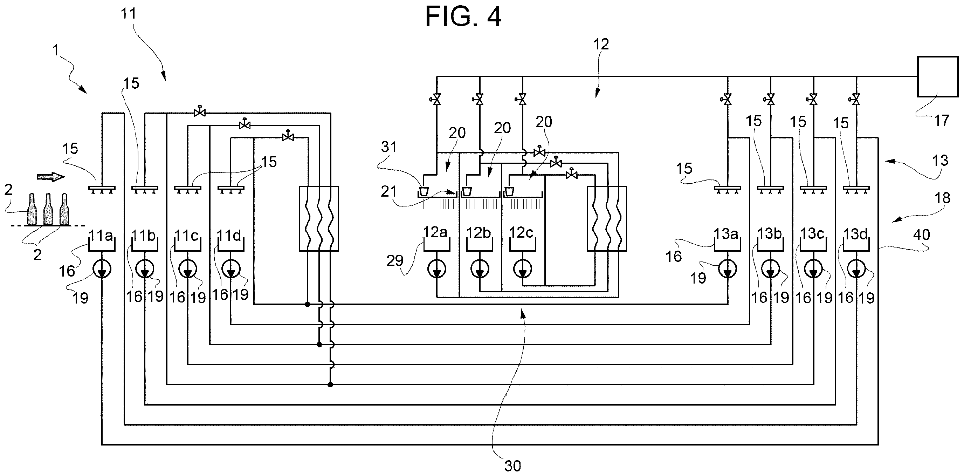

Each one of the heating, heat treatment and cooling zones 11, 12, 13 is further divided into a number of sub-zones positioned one after another along path P; in the exemplary embodiment shown in Figure 4, the heating zone 11 is divided into four sub-zones 11a-11d; the heat treatment zone 12 is divided into three respective sub-zones 12a-12c; and the cooling zone 13 is divided into four respective sub-zones 13a-13d.

Each one of the above sub-zones 11a-11d; 13a-13d is provided with a respective injecting element 15 for injecting the processing fluid onto articles 2 that are travelling the same sub-zone 11a-11d; 13a-13d, and with a respective collecting element 16, e.g. a tank, for collecting the processing fluid after it has been injected on the articles 2, i.e. after it has exchanged heat with the same articles 2. In the shown embodiment, injecting elements 15 and the collecting element 16 are positioned above and, respectively, below the forward movement path respective sections S1 and S3 of path P, so as to exploit the gravity effect for the movement of the processing fluid.

In a known manner, which is not shown in detail, each sub-zone 11a-11d; 13a-13d comprises a relative fluid system 18 associated to each injecting element 15, for controlling injecting of the processing fluid and feeding thereof.

Fluid system 18 includes a pump 19, e.g. a centrifugal pump, coupled to a respective collecting element 16, a fluid duct 40 feeding injecting elements 15, and regulating elements controllable to regulate the temperature of the processing fluid to be injected.

Fluid systems 18 are controlled to implement recirculation of processing fluid, so that processing fluid fed to injecting elements 15 of heating sub-zones 11a-11d is taken from the collecting elements 16 of cooling sub-zones 13a-13d, and the processing fluid fed to the injecting elements 15 of the cooling sub-zones 13a-13d is taken from the collecting elements 16 of heating sub-zones 11a-11d, in order to achieve an energy saving.

Furthermore, flow distribution element 20 preferably comprises collecting means 29 arranged below conveying group 10 and configured and shaped to receive the processing fluid that has been dripped from flow distribution element 20.

Preferably, flow distribution element 20 comprises recirculation means 30 such as to direct a flow of at least part of the processing fluid collected at collecting means 29 back to the channel 21.

Preferably, recirculation means 30 may comprise an overflow element 31, adapted to receive, hold and distribute, over the width of plate 25, the recirculated processing fluid. Because the processing fluid needs to reach and flow over the edge of overflow element 31, a substantially smooth supply of processing fluid into channel 21 defined by flow distribution element 20 is conveniently obtained.

In particular, recirculation means 30 are thermally coupled with a heat exchanger (not shown) which is adapted to return the processing fluid to a given set-point temperature before it is fed back to flow distribution element 20. Preferably, operation of this heat exchanger is controlled based on a temperature value measured e.g. at collecting means 29, or at overflow element 31.

In use, articles 2 travel along path P from input station I to output station O along respective conveyors 3.

As articles 2 advance along path P, they pass through portions S1, S2, and S3 inside respective thermal zones 11, 12, 13.

In particular, as articles 2 travel inside thermal zone 11, respective injecting elements 15 inject the processing fluid onto articles at progressively increasing temperatures, thus heating the edible product inside articles 2.

Preferably, the temperature of the processing fluid injected inside thermal zone 11 is lower than the threshold value, i.e. 60°C.

As articles 2 travel inside thermal zone 12, the processing fluid flows from channel 21 of flow distribution element 20 towards articles 2 travelling along portion S2 through openings 22.

The heat exchanged with processing fluid heats or cools the edible product inside articles 2.

In particular, the edible product inside articles 2 remains, inside thermal zone 12, a substantially constant level of temperature.

In this way, the edible product inside articles 2 gains a desired amount of pasteurization unit PU.

Preferably, the temperature of the processing fluid injected inside thermal zone 11 is higher than the threshold value, i.e. 60°C.

Finally, as articles 2 travel inside thermal zone 13, respective injecting elements 15 inject the processing fluid onto articles at progressively decreasing temperatures, thus cooling down the edible product inside articles 2.

Preferably, the temperature of the processing fluid injected inside thermal zone 11 is lower than the threshold value, i.e. 60°C.

The processing fluid fed to injecting elements 15 of sub-zones 11a-11d of heating zone 11 is taken from the collecting elements 16 of the sub-zones 13a-13d of cooling zone 13, and the processing fluid fed to injecting elements 15 of the sub-zones of cooling zone 13a-13d is taken from collecting elements 16 of sub-zones 11a-11d of heating zone 11, in order to achieve an energy saving.

Collecting means 29 of flow distribution element 20 receive the processing fluid that has been dripped from flow distribution element 20 and that has flown through conveying group 10.

Recirculation means 30 of flow distribution element 20 direct a flow of at least part of the processing fluid collected at collecting means 29 back to the channel 21.

In particular, overflow element 31 receives, temporarily holds and distributes, over the width of plate 25, the recirculated processing fluid. Because the processing fluid needs to reach and flow over the edge of overflow element 31, a substantially smooth supply of processing fluid into the channel defined by flow distribution element 20 is conveniently obtained.

The advantages of thermal treatment machine 1 and of the method according to the present invention will be clear from the foregoing description.

In particular, thermal treatment machine 1 comprises injecting elements 15 for injecting the processing fluid onto articles 2 travelling along section S1, S3 of path P and flow distribution element 20 for directing the processing fluid onto articles 2 travelling along section S2 of path P.

In this way, thermal treatment machine 1 can exploit the advantages of injecting elements 15 along sections S1, S3 and the advantages of flow distribution element 20 along section S2.

Still more precisely, thermal treatment machine 1, on one hand, takes advantages of the fact that injecting elements 15 ensure a uniform heating and cooling along the whole width of conveying group 10 and are particularly easy to be cleaned.

On the other hand, thermal treatment machine 1 takes advantage of the fact that flow distribution element 20 is cheap to manufacture and maintain, allows the processing fluid to be dripped without any substantial pressure drop through openings 22, and substantially does not generate any turbulence which could cause the evaporation of the processing fluid and generate resulting heat losses and water increased consumption.

Furthermore, flow distribution element 20 directs the processing fluid towards articles 2 at the first temperature, which is higher than the maximum value of the range of the second and the third temperatures of the processing fluid injected by injecting elements 15.

In particular, the first temperature is higher than the threshold value, i.e. 60°C and the above-indicated maximum value is lower than the threshold value 60°C, differently from the solution shown in EP-A-2748210 in which flow distribution element 20 is installed in heat treatment zone.

In this way, the advantageous features of injecting elements 15 and of flow distribution element 20 can be optimized.

As a matter of fact, the higher the temperature of the processing fluid, the higher the electrical consumption and the risk of the evaporation of the processing fluid.

Thus, the use of flow distribution element 20 to direct the processing fluid at higher temperatures allows to reduce the electrical consumption and the evaporation of the processing fluid, where the latter are higher.

Furthermore, the reduction of the electrical consumption and of the risk of evaporation of the processing fluid causes a reduction in the undesired overheating of the zones of the thermal treatment machine 1 which are required to remain a lower temperature, e.g. sub-zones 11a-11d and 13a-13d. This reduction reduces the need to further increase the consumption of processing fluid with the purpose of cooling down these zones.

On the other hand, it is known in the sector that the use of flow distribution elements 20 at room temperature can cause the generation of alga that need to be cleaned in order to preserve an optimal flow of the injecting fluid through openings 22.

Thus, thanks to the fact that injecting elements 15 inject the processing fluid at the second and third lower temperatures, the cleaning of thermal zones 11, 13 is rendered simpler and cheaper.

Clearly, changes may be made to thermal treatment machine 1 and to the method as described and illustrated herein without, however, departing from the scope of protection as defined in the accompanying claims.

In particular, in case thermal treatment machine 1 is a pasteurizing machine, flow distribution element 20 could extend beyond thermal zone 12, in particular inside the portions of thermal zones 11, 13 adjacent to thermal zone 12, e.g. sub-zones 11d and 13a, and in which the required temperature of the processing fluid is higher than the threshold vale, i.e. 60°C.

Furthermore, thermal treatment machine 1 could comprise more than one flow distribution element 20 and one or more injecting elements 15 arranged in whatsoever order along path P.

Finally, thermal treatment machine 1 could be different from a pasteurizing machine.

## Claims

1. A thermal treatment machine (1) for carrying out a thermal treatment on an edible product contained in a plurality of articles (2), comprising:
- conveying means (10) for advancing a plurality of articles (2) to be treated along a thermal treatment path (P) ;
- at least one plurality of injecting nozzles (15) fluidly connectable with a source (17) of a heat transfer medium and actuatable to inject, in use, said heat transfer medium on said articles (2) travelling along a first section (S1, S3) said path (P);
**characterized by** comprising at least one flow distribution element (20) fluidly connectable with said source of said heat transfer medium;
said flow distribution system (20) comprising a channel (21) adapted to be flown, in use, by a flow of said heat transfer medium; and a plurality of openings (22) in fluid connection with said channel (21) and facing said treatment path (P), so as to direct, in use, at least part of said heat transfer medium form said channel (21) over said articles (2) as they advance, in use, along a second section (S2) of said treatment path (P).

2. The thermal treatment machine of claim 1, **characterized in that** said injection nozzles (15) are adapted to inject said heat transfer medium at a first temperature, and said flow distribution system (20) is adapted to direct said heat transfer medium at a second temperature;
said second temperature being higher than said first temperature.

3. The thermal treatment machine of claim 2, **characterized in that** said second temperature is higher than a threshold value, e.g. 60°C, on the basis of the nature of the edible product.

4. The thermal treatment machine of any one of the foregoing claims, **characterized by** comprising, proceeding along said transfer path (P):
- a heating zone (11), in which said edible product is, in use, progressively heated;
- a heat treatment zone (12), in which said edible product is, in use, thermally treated at temperatures higher than in that said heating zone (11); and
- a cooling zone (13), in which said edible product is, in use, cooled;
said heating zone (11) comprising first said injection nozzles (15);
said heat treatment zone (12) comprising said flow distribution system (20);
said cooling zone (13) comprising second said injection nozzles (15).

5. The thermal treatment machine of claim 4, **characterized in that** said heat treatment zone (11) is a pasteurization zone, through which said edible product accumulates, in use, a given number of pasteurizing unit (PU).

6. The thermal treatment of claim 5, **characterized in that** said flow distribution system (20) also extends:
- in a first portion (11d) of said heating zone (11) adjacent to said heat treatment zone (12); and/or
- in a second portion (13a) of said cooling zone (13) adjacent to said heat treatment zone (12); and

7. The thermal treatment machine of any one of the foregoing claims, **characterized in that** said flow distribution system (20) comprises:
- collecting means (29) arranged below said conveying means (20) and configured to receive said heat transfer medium that has been dripped from said flow distribution element (20) and that has flown, in use, through said openings (22); and
- recirculation means (30) configured to direct a flow of at least part of said heat transfer medium collected at said collecting means (29) back to said channel (21);
said recirculation means (30) comprising an overflow element (31) adapted to receive, hold and distribute said recirculated heat transfer medium over said channel (21).

8. The thermal treatment machine of any one of claims 4 to 7, **characterized in that** each one of the heating (11) and heat-treatment (5) zones is divided into a plurality of sub-zones (11a-11d; 13a-13d), in which said injection nozzles (15) are located;
said machine (1) comprising, for each said sub-zone (11a-11d; 13a-13d) of said heating zone (11) and cooling zone (6), a respective collecting assembly (16) for collecting said processing fluid injected on said articles (3); the collecting assembly (16) of at least one sub-zone (6a-6d) of said cooling zone (6) being fluidly coupled to the first injection nozzles (15) of a corresponding sub-zone (11a-11d) of said heating zone (11), and the collecting assembly (10) of at least one sub-zone (11a-11d) of said heating zone (11) being fluidly coupled to said second injection nozzles (15) of a corresponding said sub-zone (13a-13d) of said cooling zone (13).

9. A method for thermally treating the edible product contained in a plurality of articles (2) comprising the steps of:
i) conveying said articles (2) along a thermal treatment path (P);
ii) fluidly connecting a plurality of injecting nozzles (15) with a source (17) of a heat transfer medium;
iii) injecting said heat transfer medium on said articles (2) by means of said injecting nozzles (15);
**characterized by** comprising the steps of:
v) flowing a channel (21) of a flow distribution element (20) by a flow of said heat transfer medium; said flow distribution element (20) being fluidly connected with said source (17) of said heat transfer medium;
vi) directing at least part of said heat transfer medium from said channel (21) through a plurality of openings (22) and over said articles (2) along a second section (S2) of said transfer path (P) during said step i).

10. The method of claim 9, **characterized in that** said step iii) comprises the step of injecting said heat transfer medium at a first temperature, and **in that** said step vi) comprises the step of directing said heat transfer medium at a second temperature;
said second temperature being higher than said first temperature.

11. The method of claim 10, **characterized in that** said step vi) comprises the step of directing said heat transfer medium at a temperature higher than a threshold value, e.g. 60°C, on the basis of the nature of the edible product.

12. The method of any one of claims 9 to 11, **characterized by** comprising the further steps of:
vii) progressively heating said edible product inside a heating zone (11) comprising first said injection nozzles (15) ;
viii) heat treating said edible product at temperatures higher than in that said heating zone (11) inside a heat treatment zone (12) comprising a flow distribution system (20); and
ix) cooling said edible product inside a cooling zone (12) comprising a second said injection nozzles (15).

13. The method of claim 12, **characterized in that** said step viii) comprises the step of pasteurizing said edible product.

14. The method of claim 12 or 13, **characterized in that**
said step vii) comprises the step x) of progressively heating said edible product inside a portion (11d) of said heating zone (11) adjacent to said heat treatment zone (12) by means of said flow distribution element (20); and/or
said step ix) comprises the step xi) of progressively cooling down said edible product inside a portion (13a) of said cooling zone (13) adjacent to said heat treatment zone (12) by means of said flow distribution element (20).

15. The method of any one of claims 9 to 14, **characterized by** comprising the steps of:
xii) receiving said heat transfer medium that has been dripped from said flow distribution element (20) and that has flown, in use, through said openings (22) inside collecting means (29);
xiii) recirculating at least part of said heat transfer medium collected at said collecting mans (29) back to said channel (21); and
xiv) receiving, temporarily holding and distributing said recirculated heat transfer medium over said channel (21).
